Europäisches Patentamt

European Patent Office

Office européen des brevets

(19)

(11) Veröffentlichungsnummer : **0 331 140 B1**

(12) **EUROPÄISCHE PATENTSCHRIFT**

(45) Veröffentlichungstag der Patentschrift :
17.07.91 Patentblatt 91/29

(51) Int. Cl.⁵ : **B62D 33/06**

(21) Anmeldenummer : **89103566.9**

(22) Anmeldetag : **01.03.89**

(54) **Fahrerhaus eines Nutzfahrzeugs mit hinterem Schrankelement.**

(30) Priorität : **01.03.88 DE 3806498**

(43) Veröffentlichungstag der Anmeldung :
**06.09.89 Patentblatt 89/36**

(45) Bekanntmachung des Hinweises auf die
Patenterteilung :
**17.07.91 Patentblatt 91/29**

(84) Benannte Vertragsstaaten :
**DE FR GB IT NL SE**

(56) Entgegenhaltungen :
**DE-A- 2 951 980**
**DE-U- 7 332 010**
**M.A.N. FORSCHEN, PLANEN, BAUEN, Nr. 11,**
**April 1980, Seiten 54-59, Augsburg, DE; W.**
**SCHMIDT: "Vario-System- ein neues Konzept**
**für Nutzfahrzeuge"**

(73) Patentinhaber : **Iveco Magirus**
**Aktiengesellschaft**
**Schillerstrasse 2 Postfach 27 40**
**W-7900 Ulm/Donau (DE)**

(72) Erfinder : **Kraus, Ulrich**
**Lichtensteinstrasse 3**
**W-7900 Ulm (DE)**
Erfinder : **Egle, Elmar**
**Sebastian-Fischer-Weg 32**
**W-7900 Ulm (DE)**

(74) Vertreter : **Socha, Peter**
**Iveco Magirus AG Postfach 2740**
**Schillerstrasse 2**
**W-7900 Ulm (DE)**

## Beschreibung

Die Erfindung betrifft ein Fahrerhaus eines Nutzfahrzeuges mit hinterem Schrankelement gemäß Oberbegriff des Anspruchs 1.

Aus DE-A-29 51 980 oder DE-U-73 32 010 ist ein Fahrerhaus eines Nutzfahrzeuges mit hinterem Schrankelement der vorgenannten Art bekannt. Das Schrankelement befindet sich üblicherweise hinter dem Fahrersitz und weist je nach Breite der Kabine unterschiedliche Tiefen auf. Beim Einsatz von zwei Personen steht somit nur ein Schrankelement zur Verfügung. Ebenso werden die Höhen der restlichen Einbauten von der Dachhöhe des Fahrerhauses bestimmt. Eine Vielzahl von Einzelteilen, die zudem für Rechts- und Linkslenkerversionen notwendig sind, verteuern die Produktion unterschiedlich breiter Fahrerhauskabinen.

Aufgabe der Erfindung ist die Schaffung eines Fahrerhauses der eingangs genannten Art, welches einfach aufgebaut ist und insbesondere ein Einrichtungssystem mit einem Schrankelement schafft, das unabhängig von diversen Dachhöhen die Bedürfnisse von Rechts- und Linkslenkerversionen sowie verschiedener Fahrerhausbreiten mit gleichen Einbauelementen abdeckt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 7.

Wesen der Erfindung ist mithin die Ausbildung zumindest eines modulartig aufgebauten Schrankelements an einer Fahrerhaus-Seitenwand, wobei das Schrankelement selbst eine hohe im wesentlichen der niedrigsten Fahrerhaushöhe entsprechende Seitenwand besitzt, die sowohl auf der Fahrerseite als auch in alternativer Variante seitenverkehrt auf der Beifahrerseite an der entsprechenden Fahrerhaus-Seitenwand bzw. an einer dortigen modulartigen Innenverkleidung montierbar ist.

Das Schrankelement selbst weist vorteilhafterweise auf der der Fahrerhaus-Seitenwand abgekehrten Stirnseite eine fensterrahmenartig ausgesparte Seitenwand auf, die zweckmäßigerweise mit einer Querstrebe ausgestattet ist, so daß ein unterer Aussparungsteil und ein oberer Aussparungsteil entsteht. Durch den unteren Aussparungsteil ist zweckmäßigerweise das Schrankinnere zugänglich. Er kann durch einen Klappenverschluß abgedeckt sein. Der obere Aussparungsteil dient zweckmäßigerweise zur Aufnahme einer im wesentlichen vertikal angeordneten ins Schrankinnere gewölbten Modulwanne oder einer modulartig aufgebauten Sichtblende. Die Modulwanne befindet sich zweckmäßigerweise in einem Schrankelement auf der Fahrerseite, während eine Sichtblende in einem Schrankelement vorgesehen ist, das auf der Beifahrerseite (bei entsprechend breitem Fahrerhaus) angeordnet ist. Der obere Aussparungsteil bwz. die eingebaute Modulwanne dient zur Aufnahme von losen Gegenständen. Damit diese nicht herausfallen können, sind zweckmäßigerweise vordere Halteelemente wie vordere Querleisten, Quergummizüge, Auffangnetze od. dgl. vorgesehen.

Bei einem schmalen Fahrerhaus ist zweckmäßigerweise ein einziges Schrankelement auf der Fahrerseite vorgesehen, während der restliche Fahrerhaus-Breitenraum zur gegenüberliegenden Fahrerhaus-Seitenwand auf der Beifahrerseite durch eine Querliege oder andere Einbauteile überbrückt ist.

Bei einem breiten Fahrerhaus eines Nutzfahrzeuges sind zweckmäßigerweise zwei Schrankelemente vorgesehen, eines auf der Fahrer- und das andere auf der Beifahrerseite. Der restliche Fahrerhaus-Breitenraum wird durch eine Querliege oder andere Einbauteile überbrückt.

Durch die Erfindung können mithin gleiche modulartig aufgebaute Einzelteile eines Fahrerhaus-Einrichtungssystems bei unterschiedlich breiten Fahrerhäusern verwendet werden. Bei Fernfahrerkabinen sind zweckmäßigerweise zwei Schrankelemente vorgesehen, jeweils eines für eine Person. Trotz variabler Einsätze vor dem Schrankelement können gleiche Grundbausteine für Rechts- und Linkslenkerversionen eines Fahrzeugs vorgesehen werden. Die gleichen modulartig aufgebauten Grundbausteine des Einbausystems ermöglichen neben einem flexiblen Einsatz auch eine rationelle Fertigung.

Selbstverständlich kann bei der Version einer langen Fahrerhauskabine ohne hintere seitliche Fenster auf der Beifahrerseite die Sichtblende beim Schrankelement weglassen und durch eine Modulwanne wie beim Schrankelement auf der Fahrerseite ersetzt sein.

Die Erfindung wird nachfolgend anhand von Ausführungsbeispielen unter Bezugnahme auf die beigefügte Zeichnung näher erläutert ; es zeigen :

Fig. 1 eine schematische perspektivische aufgebrochene rückwärtige Ansicht eines schmalen Fahrerhauses mit einem einzigen Schrankelement auf der Fahrerseite,

Fig. 2 eine der Fig. 1 ähnliche rückwärtige Ansicht in einem breiten Fahrerhaus mit zwei seitlichen Schrankelementen und zwischengeordneter Querliege, und

Fig. 3 die Ausführungsform nach Fig. 2 mit zusätzlichen modulartigen Einbauteilen der Schrankelemente.

Gemäß Zeichnung umfaßt ein Fahrerhaus (1) eines Nutzfahrzeuges hinter den (nicht veranschaulichten) Sitzen für Fahrer und Beifahrer diverse Einbauten.

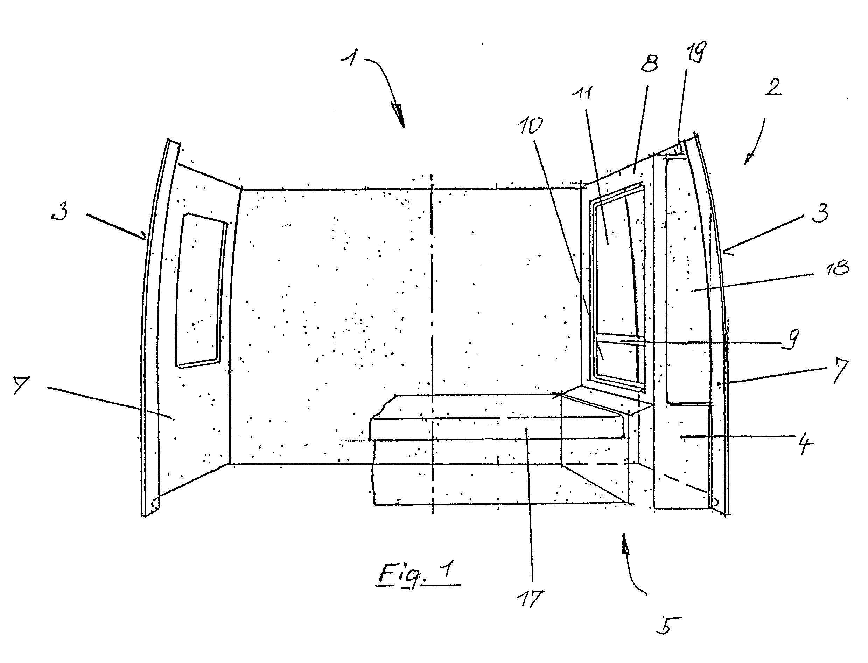

Gemäß Fig. 1 ist hinter dem Fahrersitz ein einziges Schrankelement (2) an der zugehörigen Fahrerhaus-Seitenwand (3) unter Zwischenordnung einer modulartigen Innenverkleidung (7) angeordnet, wobei das Schrankelement (2) mit einer in Richtung Fahrersitz weisenden hohen Vorderwand (4) ausgestattet ist, die eine Seitenaussparung (18) besitzt sowie eine obere Einkerbung (19) zwecks Abstützung einer oberen (nicht veranschaulichten) Querliege. Die hohe Vorderwand (4) des Schrankelements ist rechtwinklig mit einer fensterrahmenartig ausgesparten Seitenwand (8) verbunden, wobei die Aussparung selbst durch eine im wesentlichen horizontale vordere Querstrebe (9) überbrückt ist, so daß ein unterer Aussparungsteil (10) und ein oberer Aussparungsteil (11) gebildet sind. Unter dem unteren Aussparungsteil (10) schließt sich eine untere teilweise dargestellte Querliege (17) an, die bis zur gegenüberliegenden Fahrerhaus-Seitewand (3) auf der Beifahrerseite (6) reicht, bzw. bis zur dortigen modulartigen Innenverkleidung (7), die nach Art der Innenverkleidung (7) auf der gegenüberliegenden Fahrerseite (5) vorgesehen ist. Ein Schrankelement (2) wird mithin durch eine vorstehend beschriebene Vorderwand (4), eine Seitenwand (8) sowie eine modulartig aufgebaute Innenverkleidung (7) an der zugehörigen Fahrerhaus-Seitenwand (3) sowie durch einen Teil der Rückwand des Fahrerhauses (1) gebildet. Der deckenmäßige Abschluß wird durch das Schrankformteil gebildet.

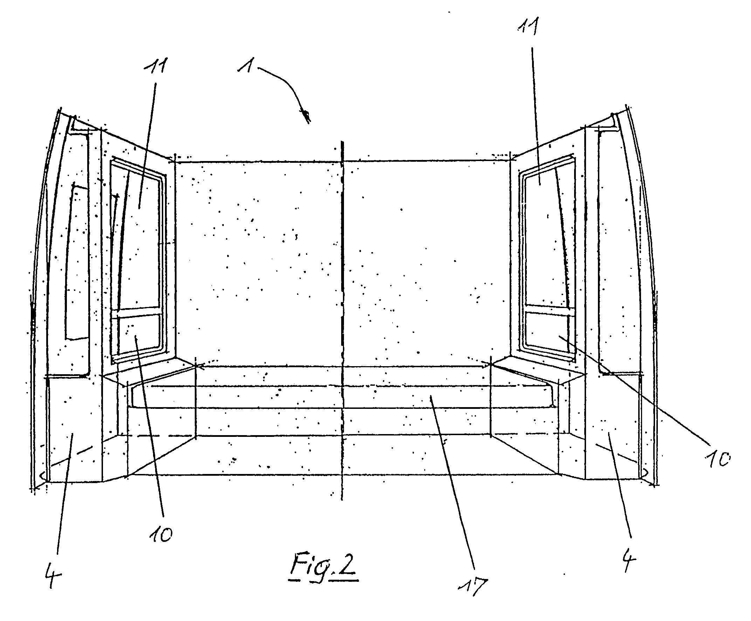

Der untere Aussparungsteil (10) ist in der Ausführungsvariante der Fig. 1 und 2 ohne Zusatzteil ausgebildet, so daß das Schrankinnere von der unteren Querliege (17) aus voll zugänglich ist, wie auch durch die Seitenaussparung (18) in der hohen Vorderwand (4). Die Ausführungsvariante nach Fig. 1 eignet sich für vergleichsweise schmale Fahrerhausbreiten.

Für vergleichsweise breite Fahrerhäuser ist die in Fig. 2 dargestellte Einrichtungsvariante zweckmäßig. Insbesondere sind nach dieser Variante zwei im wesentlichen gleich aufgebaute Schrankelemente (2) sowohl auf der Fahrerseite (5) als auch auf der Beifahrerseite (6) vorgesehen, wobei der untere Fahrerhaus-Breitenraum durch die untere Querliege (17) überbrückt ist. Die Ausführungsvariante nach Fig. 2 verwendet für ein Schrankelement (2) praktisch die gleichen modulartigen Einzelteile, insbesondere eine gleich ausgebildete Seitenwand (8) sowie eine gleich ausgebildete hohe Vorderwand (4), die seitenverkehrt montiert ist. Durch den oberen Aussparungsteil (11) der Seitenwand (8) des Schrankelements (2) auf der Beifahrerseite (6) kann der Fahrer vom Fahrersitz aus das rechte hintere Seitenfenster (20) des Fahrerhauses bzw. den dortigen Verkehr einsehen. Bei dieser Ausstattungsanordnung reduziert sich bei wahlweise gleichzeitig genutzer Kleiderfachnutzung bedingter-maßen die Sicht.

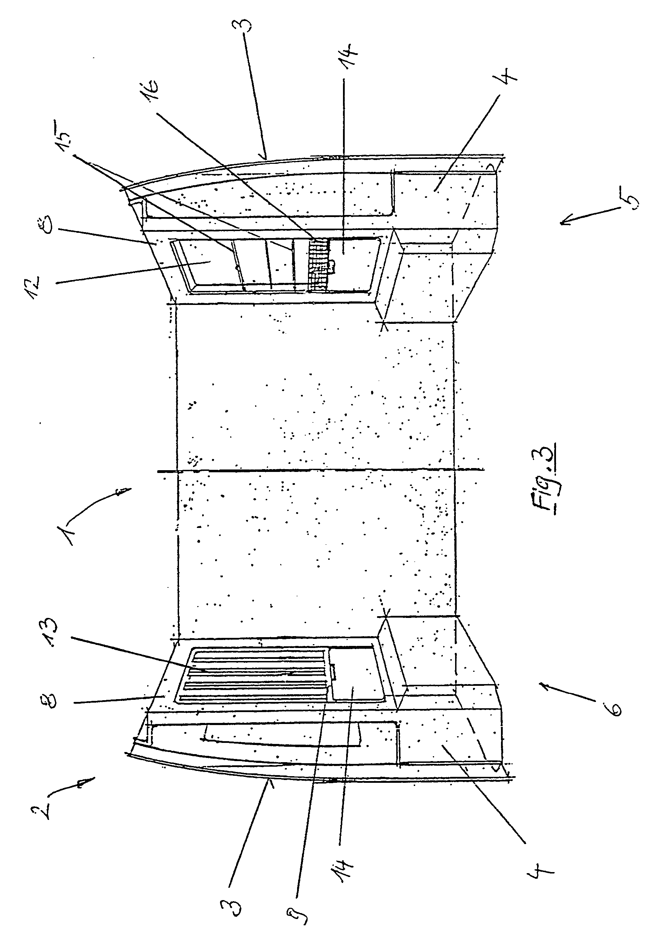

In Fig. 3 ist die Ausführungsvariante einer breiten Fahrerhauskabine nach Fig. 2 mit zwei seitlichen Schrankelementen (2) dargestellt, wobei die unteren Aussparungsteile (11) der beiden Seitenwände (8) der Schrankelemente mit einem Klappenverschluß (14) versehen sind. Der obere Aussparungsteil (11) auf der Fahrerseite (5) besitzt eine im wesentlichen vertikal angeordnete eingesetzte Modulwanne (12), so daß eine Abtrennung zum eigentlichen Schrankteil erfolgt. An vorderer Stelle sind Halteelemente wie vordere Querleisten, Quergummizüge (15) sowie ein unteres Auffangnetz (16) vorgesehen, so daß abgelegte Gegenstände festgehalten werden bzw. nicht herausfallen können.

Auf der Beifahrerseite (6) ist der obere Aussparungsteil (11) mit einer Modulsichtblende (13) versehen, die Vertikallamellen besitzt, welche eine direkte Einsicht durch das hintere Seitenfenster aus in die Fahrerhauskabine versperrt, jedoch eine Durchsicht in Schrägrichtung vom Fahrersitz aus durch das hintere Seitenfenster auf der Beifahrerseite (6) möglich ist.

Ersichtlich wird mithin durch die Erfindung bei modulartig aufgebauten Einzelteilen insbesondere der Ausstattung schmaler und breiter Fahrerhauskabinen mit Hilfe einfacher Mittel Rechnung getragen. Im gleichen Maße können bei schmalen Fahrerhauskabinen Rechts- und Linkslenkerversionen einfach realisiert werden, bei denen sich das einzige Schrankelement (2) immer hinter dem Fahrersitz befindet.

## Patentansprüche

1. Fahrerhaus (1) eines Nutzfahrzeuges, mit hinter den Sitzen angeordneten Einbauten einschließlich Schrankelement an einer Fahrerhaus-Seitenwand (3), dadurch gekennzeichnet, daß das modulartig oder einteilig aufgebaute Schrankelement (2) mit einer hohen Vorderwand (4) ausgebildet ist, die sowohl auf der Fahrerseite (5) als auch seitenverkehrt auf der Beifahrerseite (6) an den Fahrerhaus-Seitenwänden (3) bzw. an einer modulartig aufgebauten Innenverkleidung (7) befestigbar ist.

2. Fahrerhaus nach Anspruch 1, dadurch gekennzeichnet, daß das Schrankelement (2) auf der der Fahrerhaus-Seitenwand (3) abgekehrten Stirnseite eine fensterrahmenartig ausgesparte Schrankelement-Seitenwand (8) aufweist.

3

3. Fahrerhaus nach Anspruch 2, dadurch gekennzeichnet, daß die Schrankelement-Seitenwand (8) eine Querstrebe (9) besitzt, wobei durch den unteren Aussparungsteil (10) das Schrankinnere zugänglich und in dem oberen Aussparungsteil (11) alternativ eine Modulwanne (12) oder eine Modulsichtblende (13) einsetzbar ist.

4. Fahrerhaus nach Anspruch 3, dadurch gekennzeichnet, daß der untere Aussparungsteil (10) einen Klappenverschluß (14) aufweist.

5. Fahrerhaus nach Anspruch 3 oder 4, dadurch gekennzeichnet, daß der obere mit einer Modulwanne (12) abgedeckte Aussparungsteil (11) vordere Halteelemente wie vordere Querleisten, Quergummizüge (15), Auffangnetze (16) oder dergl. aufweist.

6. Fahrerhaus nach einem der Ansprüche 1 bis 5, dadurch gekennzeichnet, daß bei einem schmalen Fahrerhaus (1) an einer Fahrerhaus-Seitenwand (3) ein Schrankelement (2) angeordnet und der restliche Fahrerhaus-Breitenraum zur gegenüberliegenden Fahrerhaus-Seitenwand (3) durch eine Querliege (17) oder andere Einbauteile überbrückt ist (Fig. 1).

7. Fahrerhaus nach einem der Ansprüche 1 bis 5, dadurch gekennzeichnet, daß bei einem breiten Fahrerhaus (1) an jeder Fahrerhaus-Seitenwand (3) ein Schrankelement angeordnet und der restliche Fahrerhaus-Breitenraum durch eine Querliege (17) oder andere Einbauteile überbrückt ist, wobei das fahrerseitige Schrankelement (2) mit einer Modulwanne (12) und das beifahrerseitige Schrankelement (2) mit einer Modulsichtblende (13) ausgestattet ist (Fig. 2 und 3).

## Claims

1. A driver cab (1) of a commercial vehicle, with components arranged behind the seats, including a cupboard unit on a side wall (3) of the driver cab, characterised in that the cupboard unit (2), which is of modular composition or is composed in one piece, is constructed with a high front wall (4), which is able to be attached both on the driver's side (5) and also laterally inverted on the passenger side (6) on the side walls (3) of the driver cab or respectively on an inner lining (7) of modular composition.

2. A driver cab according to Claim 1, characterised in that the cupboard unit (2) has a cupboard unit side wall (8), recessed in the manner of a window frame, on the side facing away from the side wall (3) of the driver cab.

3. A driver cab according to Claim 2, characterised in that the side wall (8) of the cupboard unit has a transverse strut (9), in which the interior of the cupboard is accessible through the lower recess part (10) and in the upper recess part (11) alternatively a modular trough (12) or a modular viewing shutter (13) is able to be inserted.

4. A driver cab according to Claim 3, characterised in that the lower recess part (10) has a flap shutter (14).

5. A driver cab according to Claim 3 or 4, characterised in that the upper recess part (11), which is covered by a modular trough (12), has anterior holding elements such as anterior transverse bands, transverse rubber strips (15), catch nets (16) or the like.

6. A driver cab according to one of Claims 1 to 5, characterised in that in the case of a narrow driver cab (1) a cupboard unit (2) is arranged on a side wall (3) of the driver cab, and the remaining driver cab width is bridged to the opposite side wall (3) of the driver cab by a transverse couch (17) or other component parts (Fig. 1).

7. A driver cab according to one of Claims 1 to 5, characterised in that in the case of a wide driver cab (1) a cupboard unit is arranged on each side wall (3) of the driver cab, and the remaining driver cab width is bridged by a transverse couch (17) or other component parts, in which the cupboard unit (2) on the driver's side is equipped with a modular trough (12) and the cupboard unit (2) on the passenger side is equipped with a modular viewing shutter (13) (Fig. 2 and 3).

## Revendications

1. Cabine de conducteur d'un véhicule utilitaire, avec des éléments incorporés disposés en arrière des sièges y compris un élément d'armoire disposé sur l'une des parois latérales (3) de la cabine du conducteur, caractérisée en ce que l'élément d'armoire (2) construit de façon modulaire ou monobloc est constitué par une haute paroi frontale (4), qui peut être fixée aussi bien du côté du conducteur (5) que symétriquement du côté de l'accompagnateur (6) sur les parois latérales (3) de la cabine du conducteur ou sur un revêtement intérieur (7) construit de façon modulaire.

2. Cabine de conducteur selon la revendication 1, caractérisée en ce que, l'élément de rangement (2) présente une paroi latérale (8) d'élément d'armoire évidée comme un encadrement de fenêtre sur la paroi latérale qui est en face de la paroi latérale (3) de la cabine du conducteur.

3. Cabine de conducteur selon la revendication 2, caractérisée en ce que la paroi latérale (8) de l'élément d'armoire possède une entretoise transversale (9), l'intérieur de l'armoire de rangement étant accessible à travers la partie évidée inférieure (10) et soit une cuvette modulaire (12) soit une persienne modulaire (13) pouvant être installée dans la partie évidée supérieure (11).

4. Cabine de conducteur selon la revendication 3, caractérisée en ce que la partie évidée inférieure (10) est pourvue d'un volet de fermeture (14).

5. Cabine de conducteur selon les revendications 3 ou 4, caractérisée en ce que la partie évidée supérieure (11) à équiper d'une cuvette modulaire (12) est pourvue en avant de bandeaux transversaux, de tirants transversaux caoutchoutés (15), de filets de rangement (16) ou d'éléments analogues.

6. Cabine de conducteur selon l'une des revendications 1 à 5, caractérisée en ce que, s'il agit d'une cabine de véhicule étroite (1), l'élément de rangement (2) est monté sur l'une des parois latérales (3) de la cabine de conducteur et l'espace qui est disponible dans le sens de la largeur de la cabine de conducteur est relié par une couchette transversale (17) et d'autres éléments incorporés allant jusqu'à la paroi latérale (3) de la cabine du conducteur située en face (figure 1).

7. Cabine de conducteur selon l'une des revendications 1 à 5, caractérisée en ce que, s'il s'agit d'une cabine du conducteur large, un élément d'armoire est disposé sur chacune des parois latérales (3) de la cabine du conducteur, et l'espace résiduel dans le sens de la largeur de la cabine du conducteur est relié par une couchette transversale (17) et d'autres éléments incorporés, l'élément d'armoire (2) situé du côté du conducteur étant équipé d'une cuvette modulaire (12) et l'élément de rangement (2) situé du côté de l'accompagnateur étant équipé d'une persienne modulaire (13) (figures 2 et 3).

Fig. 1

EP 0 331 140 B1

Fig.2

Fig.3